# EUROPEAN PATENT SPECIFICATION

(11) **EP 2 893 105 B1**
(45) Date of publication and mention of the grant of the patent: **26.10.2016**
(21) Application number: 13783096.4
(22) Date of filing: 21.08.2013
(51) Int. Cl.: E04H 1/12, C08J 5/04, B32B 27/00, B32B 5/02, B32B 5/26

(54) **BUS STOP SHELTER**
BUSHALTESTELLE
ABRI D'ARRET D'AUTOBUS

(30) Priority: 21.08.2012 WO PCT/IB2012/054230
(43) Date of publication of application: 15.07.2015
(73) Proprietor: AFA JCDecaux A/S, 2650 Hvidovre (DK); JCDecaux SA, 92200 Neuilly-Sur-Seine (FR)
(72) Inventor: AXELSEN, Anders, DK-2650 Hvidovre (DK); JØRGENSEN, Kasper Guldager, DK-1401 Copenhagen K (DK); LUND, Morten Norman, DK-1401 Copenhagen K (DK)
(74) Representative: Cabinet Plasseraud
(86) International application number: PCT/IB2013/056786
(87) International publication number: WO 2014/030130

(56) References cited:
- FR-A1- 2 800 114
- US-A1- 2008 160 567

## Description

### TECHNICAL FIELD

The present invention pertains to a bus stop shelter.

### BACKGROUND OF THE INVENTION

Bus shelters are known in the art. Bus stop infrastructure ranges from a simple pole and sign to a rudimentary shelter, to sophisticated structures. The usual minimum is a pole-mounted flag with a suitable name or symbol. Bus stop shelters known in the art may have a full or partial roof, supported by a two-, three- or four-sided construction. Modern stops are usually mere steel and glass/perspex and/or glass fiber constructions, although in other places, such as rural areas, bus stop shelters may be wooden or brick built. The construction may include small inbuilt seats. The construction may feature advertising, ranging from simple posters to complex illuminated, changeable or animated displays. Some installations have also included interactive advertising. Design and construction may be uniform to reflect a large corporate or local authority provider, or installations may be more personal or distinctive where a small local authority, such as a parish council, is responsible for the bus stop and the associated shelter. The bus stop shelter may include separate street furniture, such as a bench, lighting and a garbage receptacle.

Individual bus stop shelters may simply be placed on the sidewalk next to the roadway, although they can also be placed to facilitate use of a bus-way. More complex installations can include construction of a bus turnout or a bus bulb for traffic management reasons, although use of a bus lane can make these unnecessary. Several bus stops may be grouped together to facilitate easy transfer between routes. These may be arranged in a simple row along the street, or in parallel or diagonal rows of multiple stops. Groups of bus stops may be integral to transportation hubs. With extra facilities, such as a waiting room or ticket office, outside groupings of bus stops can be classed as a rudimentary bus station.

Most bus stops are identified with a metal sign attached to a pole or light standard. Some stops are plastic strips strapped on to poles, and others involve a sign attached to a bus shelter. The signs are often identified with a picture of a bus and/or with the words bus stop (in English speaking countries). The bus stop flag will sometimes contain the route numbers of all the buses calling at the stop, optionally indicating frequent, infrequent, 24 hour, and night services. The flag may also show the logo of the dominant bus operator or the logo of a local transit authority with responsibility for bus services in the area. Additional information may include an unambiguous name for the stop and the direction/common destination of most calling routes. Bus stops will often include timetable information, either the full timetable, or for busier routes, the times or frequency that a bus will call at the specific stop. Route maps and tariff information may also be provided, and telephone numbers to relevant travel information services. The stop may also incorporate or have nearby real time information displays with the arrival times of the next buses. Increasingly, mobile phone technology is being referenced on more remote stops, allowing the next bus times to be sent to a passenger's handset based on the stop location and the real time information. Automated ticket machines may be provided at busy bus stops.

FR 2 800 114 discloses a bus stop shelter comprising an elongated canopy having an upwardly arced shape, said canopy forming an overhead roof for the bus stop shelter, a plurality of wall sections, said canopy and wall sections being supported by a framework mounted on a sidewalk, said canopy and wall sections defining a partially enclosed covered space providing shade and shelter for people within said enclosed covered space.

In CN 202 031 346 U is disclosed a full-prefabricated glass-fiber reinforced composite house system. The house system is made to have various appearances, such as a bamboo house, a log cabin, a stone house and an antique architecture through various molds and coloring. The house system may be utilized as a kiosk, a stall, a bus shelter, or a public toilet. This housing system is therefore made entirely from glass-fiber reinforced composite materials, and is therefore not bio-degradable.

In CN 102 071 743 is disclosed yet another housing system made from cordwood. The building system comprises a variety of components, which can be mutually buckled and jointed to each other.

WO 2004/081311 discloses composite materials formed from natural fibers, such as wood, or plant fibers, and a sheet material, such as acrylic materials.

In US 2011/097530 it is disclosed that biodegradable polyesters may be formed into fibers for use as traditional polyester fibers.

In US 2008/160567 is disclosed biocomposite materials and methods for making them. More specifically, methods for producing biocomposites of natural fibers and poly(hydroxy alkanoate) (PHA) polymers are disclosed. The biocomposites may be used as raw materials for the construction of structural or consumer products. For example, structural and non-structural building components, which may include beams, panels, walls, scaffolding, pipes, roofing, insulated panels, partition walls, wallboard panels, and architectural pre-cast elements. These may be used in a variety of civil structures including bridges and buildings, such as for temporary shelter, long-term housing, commercial offices and manufacturing facilities. Natural plant fibers are woven into a fabric or mat, and then treated with a polymer resin matrix.

Bus shelters are often subjected to vandalism, whereby certain parts thereof need to be replaced regularly. Furthermore, the whole shelter or main parts of it, such as the roof, needs to be replaced after a certain time span. Since it is commonplace to use roofing made from fiber glass, the maintenance and replacement of bus shelters has a detrimental environmental effect in addition to being very costly, because fiberglass is virtually non-degradable in nature and is therefore often disposed in landfills for all eternity.

This implies that severe environmental problems are associated with the lifecycle of traditional bus shelters. Some of these problems can in principle be solved by using bus shelters manufactured from wood - which is biodegradable - as is known in the art. However, manufacturing bus shelters from wood is costly and limits the possibilities of providing a contemporary design. Furthermore, wood shelters require a very high degree of maintenance, and despite thorough maintenance, such wood shelters have a significantly lower lifespan than the average lifespan of 40 years for a bus shelter manufactured from steel/aluminum and fiberglass. There is therefore a need for a bus shelter that is biodegradable and - in principle - has the same or similar properties as shelters that are made from fiberglass.

### SUMMARY OF THE INVENTION

It is thus an object of the present invention to provide a bus shelter manufactured from materials that are at least in part biodegradable and at the same time are as strong and weather resistant as conventional materials used during the expected life span of a bus shelter.

According to the present invention, the above-mentioned and other objects are fulfilled by a bus stop shelter comprising an elongated canopy forming an overhead roof for the bus stop shelter, at least two wall sections, said canopy and wall sections being supported by a framework mounted on a sidewalk, said canopy and wall sections defining a partially enclosed covered space providing shade and shelter for people within said enclosed covered space, wherein the canopy is formed from a biocomposite material, said biocomposite material being formed by a matrix comprising one or more at least in part biodegradable plastics and a reinforcement of at least one layer of woven mats of natural fibers, wherein both the biodegradable plastics and the natural fibers are derived from renewable natural resources.

Hereby is achieved a bus shelter, wherein the canopy is at least in part bio-degradable, while at the same time has some of the same properties regarding its physical appearance and resistance to weather during the expected lifetime of a conventional bus stop shelter, which is approximately 40 years on average. Furthermore, by using a canopy made from a biocomposite material, the huge detrimental environmental effects of using fiberglass are avoided.

Preferably, also the supporting frame is also formed by a biocomposite material, said biocomposite material being formed by a matrix comprising one or more at least in part biodegradable plastics and a reinforcement of at least one layer of woven mats of natural fibers, wherein both the biodegradable plastics and the natural fibers are derived from renewable natural resources. Hereby is achieved a bus stop shelter wherein all those parts that are traditionally made from fiberglass and/or aluminum are avoided. Thus, a much more environmentally friendly solution is achieved where the bus stop shelter becomes a "cradle-to-cradle" structure, i.e. a structure which will in a natural way become part of the biological environment from which it is formed.

Preferably, at least one of the wall sections comprises a transparent section which is connected to said framework. Said transparent wall section is preferably made from transparent glass.

Preferably, the canopy is placed on top of said framework, said canopy having an upwardly arced shape.

According to a preferred embodiment, the biocomposite material is formed by a matrix comprising one or more at least in part biodegradable plastics and a reinforcement of natural fibers. Preferably, more than 75% to 90% of the plastic is biodegradable.

According to another embodiment, at least 50% of the matrix is formed by biologically derived polyester and/or bio-epoxy, and the remainder of the matrix is formed by conventional polyester and/or bio-epoxy.

According to a further embodiment, the matrix comprises any of the following materials: bio-epoxy, polyhydroxyalkanoates, polylactic acid, polybutylene succinate, polycaprolactone, polyanhydrides, and polyvinyl alcohol.

According to the invention, the natural fibers are derived from renewable natural resources, which renewable natural resources may be any of the following: straw, wood, bark, seed, fruit, leaf, and bast.

According to a further embodiment, the natural fibers comprise any of the following: flax, jute, hemp, sisal, cotton, ramie, kenaf, and wheat.

The above-mentioned and further objects of the invention are achieved by a method of manufacturing a canopy and/or a framework of a bus stop shelter, the method comprising the steps of:
- providing a plurality of woven mats of natural fibers, wherein the natural fibers have been derived from renewable natural resources,
- providing a matrix comprising biodegradable plastic, wherein said biodegradable plastic has been derived from renewable natural resources,
- placing at least two layers of the woven mats of natural fibers in a matched die,
- applying the matrix material to the woven mats of natural fibers in the die,
- curing the consolidated laminated structure of woven mats and matrix material at room temperature, and
- removing the cured consolidated structure of woven mats and matrix material from the die and cutting and/or grinding excess material from it in order to provide a canopy and/or a framework having the desired finish.

According to a preferred embodiment, the step of placing said layer of woven mats of natural fibers in the die is performed by hand lay-up, and the step of applying the matrix material to the mats is performed manually using brushes and rollers.

According to another, alternative, preferred embodiment, the step of applying said matrix material to the mats is performed by
- placing the plurality of mats of woven fibers in a vacuum bag, and
- infuse the matrix material into the fibers by drawing it through the fibers using vacuum, while the vacuum bag is placed in the matched die, thereby forming a laminated structure of layers of mats and matrix material that matches the shape of the die when cured.

Preferably, the consolidated laminated structure is cured at atmospheric pressure.

In one embodiment of the method according to the invention, the mats are stacked in a charge pattern before being placed in the die.

In a in a further preferred embodiment of the method according to the invention, at least 75% of the matrix is formed by biologically derived polyester and/or bio-epoxy, and the remainder of the matrix is formed by conventional polyester and/or conventional epoxy.

In a further preferred embodiment of the method according to the invention, the matrix comprises any of the following materials: bio-epoxy, polyhydroxyalkanoates, polylactic acid, polybutylene succinate, polycaprolactone, polyanhydrides, and polyvinyl alcohol.

In a further preferred embodiment of the method according to the invention, the renewable natural resources are any of the following: straw, wood, bark, seed, fruit, leaf, and bast.

In a further preferred embodiment of the method according to the invention, the natural fibers comprise any of the following: flax, jute, hemp, sisal, cotton, ramie, kenaf, and wheat. Investigations performed by the applicant have shown that the best results are achieved by woven mats made from flax, which therefore is the preferred source of natural fibers.

The method may according to a further embodiment further comprise the step of forming said canopy and/or supporting structure around a biologically derived core material. Said core material may comprise cork, wood and/or bio-polyurethane.

In a further embodiment of the method according to the invention, said canopy and/or supporting structure has a Young's modulus of between 8 and 20 GPa, preferably between 10 and 15 GPa.

In a further embodiment of the method according to the invention, said canopy and/or supporting structure has a flexural modulus of between 8 and 17 GPa, preferably between 8 and 14 GPa.

In a further embodiment of the method according to the invention, said canopy and/or supporting structure has a flexural strength of between 80 and 120 MPa, preferably between 90 and 110 MPa.

According to an alternative embodiment, the method may comprise the step of forming said supporting structure and/or canopy from said plurality of woven mats of natural fibers and matrix by resin transfer moulding.

According to a further alternative embodiment, the method may comprise the step of forming said supporting structure and/or canopy from said plurality of woven mats of natural fibers and matrix by compression moulding.

According to a further alternative embodiment, the method may comprise the step of forming said supporting structure and/or canopy from said plurality of woven mats of natural fibers and matrix material by pultrusion.

The method may according to any of these alternative embodiments further comprise the step of curing the consolidated laminated structure at room temperature or in an oven at a high temperature. Said oven may have a temperature between 40 to 60 degrees, or between 60 to 80 degrees, or between 80 to 120 degrees, or between 120 - 180 degrees.

The method may according to any of these alternative embodiments further comprise the step of curing the consolidated laminated structure at room temperature or in a pre-heated die at a high temperature. Said pre-heated die may have a temperature between 40 to 60 degrees, or between 60 to 80 degrees, or between 80 to 120 degrees, or between 120 - 180 degrees.

The method may according to any of these alternative embodiments comprise a step of applying a pressure which is between 1 and 5 atmospheres to the laminated structure of mats and matrix material before it has cured.

The method may according to any of these alternative embodiments comprise a step of applying a pressure to the plurality of mats in the pre-heated die before the matrix material cures. Said pressure may be between 1 and 10 atmospheres, or between 1 and 7 atmospheres, or between 2 and 5 atmospheres, or between 1 and 3 atmospheres, or between 3 and 6 atmospheres, or between 6 and 8 atmospheres, or between 8 and 10 atmospheres.

The matrix in the above-mentioned biocomposites holds the fibers together, transfers applied loads to those fibers, and protects them from mechanical damage and other environmental factors.

### BREIF DESCRIPTION OF THE DRAWINGS

A further understanding of the nature and advantages of the present invention may be realized by reference to the remaining portions of the specification and the drawings. In the following, preferred embodiments of the invention are explained in more detail with reference to the drawings, wherein
- Fig. 1: shows an embodiment of a bus stop shelter,
- Fig. 2: shows another embodiment of a bus stop shelter,
- Fig. 3a - 3f: shows various embodiments of bus stop shelters,
- Fig. 4: shows an embodiment of a method according to the invention, and
- Fig. 5: shows a preferred embodiment of a method according to the invention.

### DETAILED DESCRIPTION

The present invention will now be described more fully hereinafter with reference to the accompanying drawings, in which exemplary embodiments of the invention are shown. The invention may however be embodied in different forms and should not be construed as limited to the embodiments set forth herein. Rather, these embodiments are provided so that this disclosure will be thorough and complete, and fully convey the scope of the invention to those skilled in the art. Like reference numerals refer to like elements throughout. Like elements will, thus, not be described in detail with respect to the description of each figure.

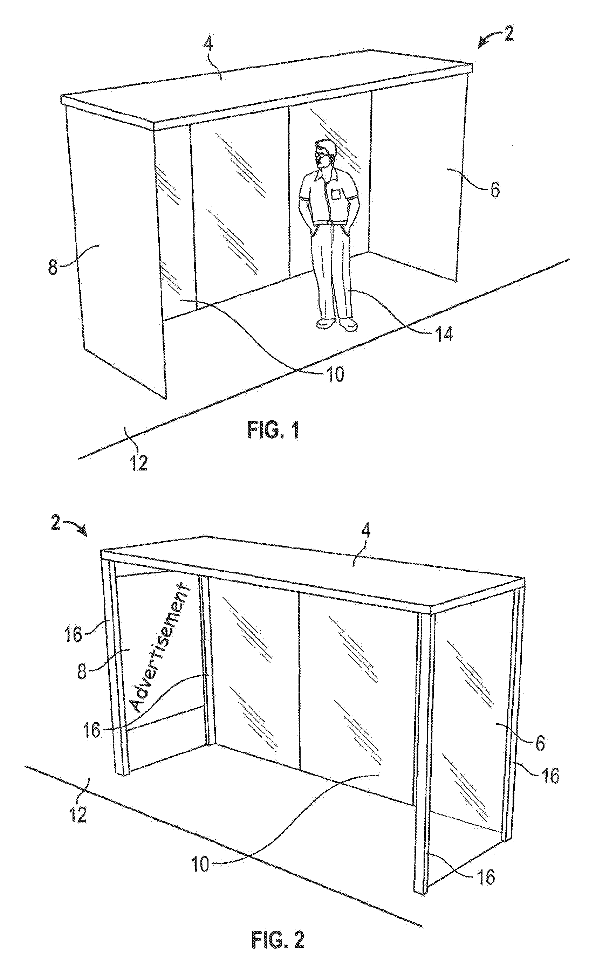

Fig. 1 shows an embodiment of a bus stop shelter 2 according to the invention. The illustrated bus stop shelter 2 comprises an elongated canopy 4 forming an overhead roof for the bus stop shelter 2. The bus stop shelter 2 also has three wall sections 6, 8, 10, two end or gable wall sections 6 and 8, and a side section 10.

In the illustrated embodiment, the side section 10 comprises three glass wall elements in order to enhance the vision of a user of the bus stop shelter 2. The canopy 4 and wall sections 6, 8, 10 are supported by a framework mounted on a sidewalk 12. In the illustrated embodiment, the framework forms an integral part of the gable wall sections 6 and 8. The canopy 4 and the wall sections 6, 8, 10 define a partially enclosed covered space providing shade and shelter for people 14 within said partially enclosed covered space. The canopy 4 of the illustrated bus stop shelter 2 comprises a biocomposite material which can be a biocomposite material as described above.

Hereby is achieved a bus shelter 2, wherein the canopy 4 is at least in part bio-de-gradable and at the same time has some of the same properties regarding its physical appearance and resistance to weather during the expected lifetime of a conventional bus stop shelter, which is approximately 40 years on average. Furthermore, by using a canopy 4 made from a biocomposite material, the huge detrimental environmental effects of using fiberglass are avoided. Preferably, also the supporting frame, which in the illustrated embodiment is embodied as two gable sections 6 and 8, of the bus stop shelter 2 comprises a biocomposite material. Hereby is achieved a bus stop shelter 2 wherein all the parts that are traditionally made from fiberglass and/or aluminum are avoided. Thus, a much more environmentally friendly solution is achieved, where the bus stop shelter 2 becomes a "cradle-to-cradle" structure, i.e. a structure which in a natural way will become part of the biological environment from which it is formed. In a preferred embodiment of the illustrated bus stop shelter 2, any of the two gable wall sections 6 and 8 may be configured for displaying advertisements.

Fig. 2 shows an alternative embodiment of a bus stop shelter 2 according to the invention. In this embodiment, one of the gable wall sections 6 is embodied as a transparent glass wall. The canopy 4 and wall sections 6, 8, 10 are supported by a framework 16 mounted on a sidewalk 12. In the illustrated embodiment the framework 16 comprises four poles, onto which the sidewalls 6, 8, and 10 are mounted. The canopy 4 is also mounted on top of the four poles. The canopy 4 of the illustrated bus stop shelter 2 comprises a biocomposite material, which can be a biocomposite material as described above, and the framework 16 is in a preferred embodiment also formed by a biocomposite material. However, in an alternative embodiment, the framework 16 may be formed by a metal, such as aluminum. In the illustrated embodiment, the wall section 8 may furthermore be formed at least in part by a biocomposite material. As illustrated, the wall section 8 is equipped with an advertisement.

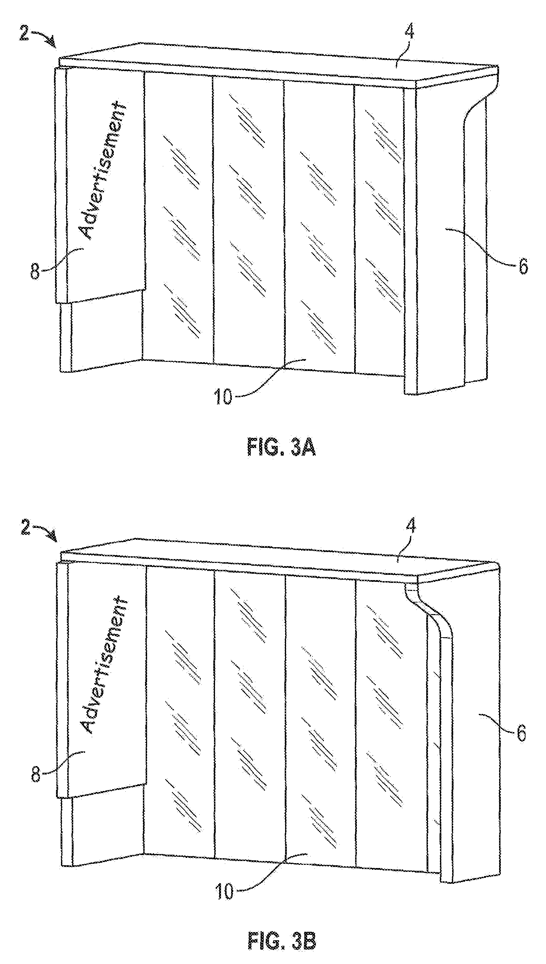

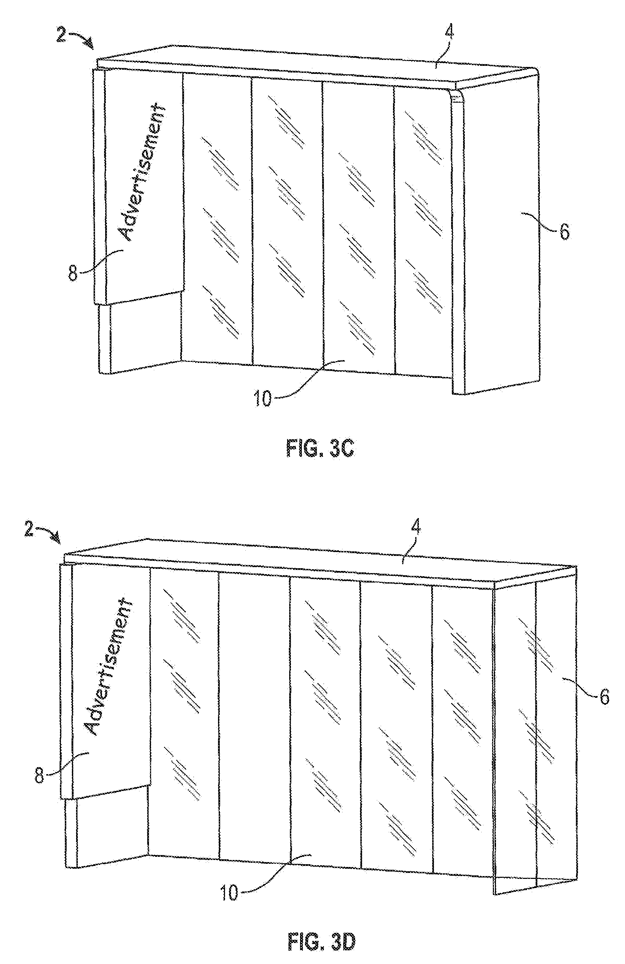

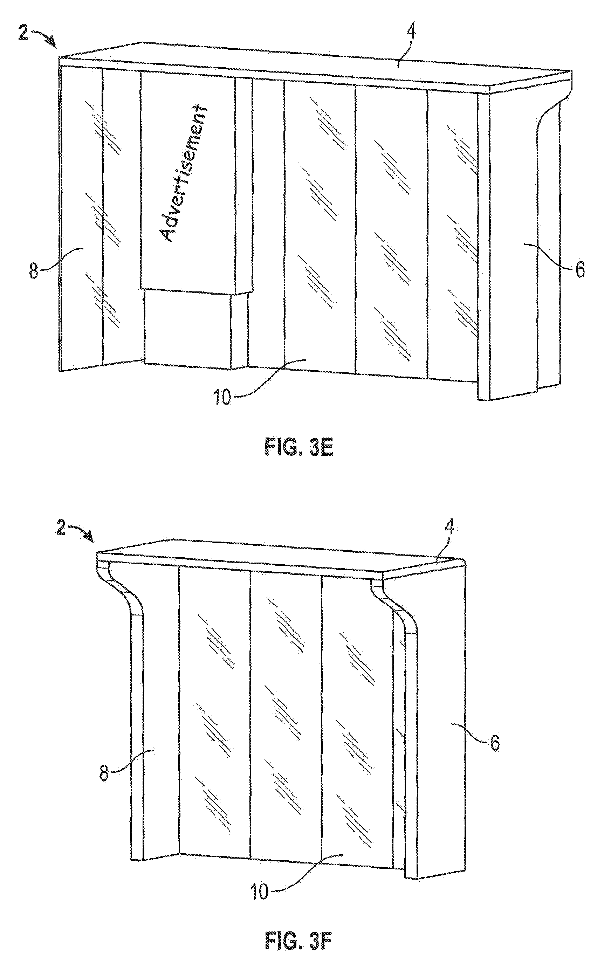

Fig. 3a-3f show various alternative embodiments of a bus stop shelter 2 according to the invention. In fig. 3a-3e one of the wall sections 8 or 10 comprises an advertisement. In Fig. 3f the wall sections 6 and 8 constitute a framework supporting the canopy 4. In all the figures 3a-3f, the canopy 4 is formed from a biocomposite material, which may be a biocomposite as described above. Preferably, the wall sections 8 in figures 3a-3d also comprise a major part of biocomposite material. Additionally, the wall section 6 in figures 3a-3c, and 3e comprises a major part of biocomposite material. In the final figure 3f, both gable wall sections 6 and 8 are preferably made of a biocomposite material. As illustrated, the wall section 10 comprises at least in part a transparent glass wall.

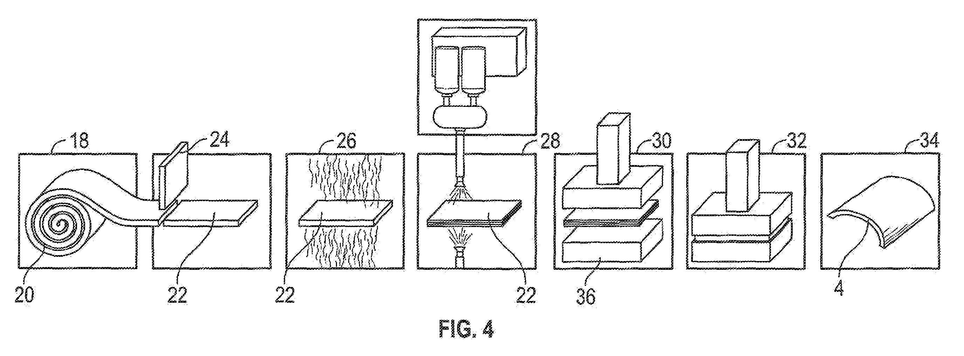

Fig. 4 schematically illustrates an embodiment of a method of manufacturing a supporting structure for a bus stop shelter from biocomposite materials. Said supporting structure may be a canopy and/or framework.

The illustrated method comprises the step 18 of providing a continuous supply of woven mats 22 of natural fibers. These mats 22 are supplied by a roll 20 of a plurality of coherent mats 22. The mats 22 are cut from the roll 20 by a cutting tool 24. Then in step 26, a matrix material is applied to the mats 22.

The step of applying the matrix material to the mats 22 may comprise the step of pulling said mats 22 through a bath of matrix material, or as illustrated, matrix material is sprayed on each side of said mats.

Then in step 28 the mats 22 are stacked in a layer comprising a plurality of mats 22 on top of each other. The mats 22 are preferably stacked in a charge pattern before being placed in a pre-heated die 36 in the subsequent step 30, illustrating the placing of said mats 22 into the pre-heated die 36 in which the matrix material cures.

The temperature of the pre-heated die 36 is preferably between 40 to 60 degrees, or between 60 to 80 degrees, or between 80 to 120 degrees, or between 120 to 180 degrees.

In the subsequent step 32, pressure is applied to the plurality of mats 22 in the pre-heated die 36. This pressure is applied before the matrix material is allowed to cure.

The applied pressure may be between 1 and 10 atmospheres, or between 1 and 7 atmospheres, or between 2 and 5 atmospheres, or between 1 and 3 atmospheres, or between 3 and 6 atmospheres, or between 6 and 8 atmospheres, or between 8 and 10 atmospheres.

Finally in step 34, the finished mould (e.g. a canopy 4 or a part of a framework for a bus stop shelter) is removed from the die 36.

The illustrated method may further comprise the step of forming said supporting structure around a biologically derived core material, which may be placed between a number of mats 22 of natural fibers. Examples of such biologically derived core materials may be cork and/or bio-polyurethane.

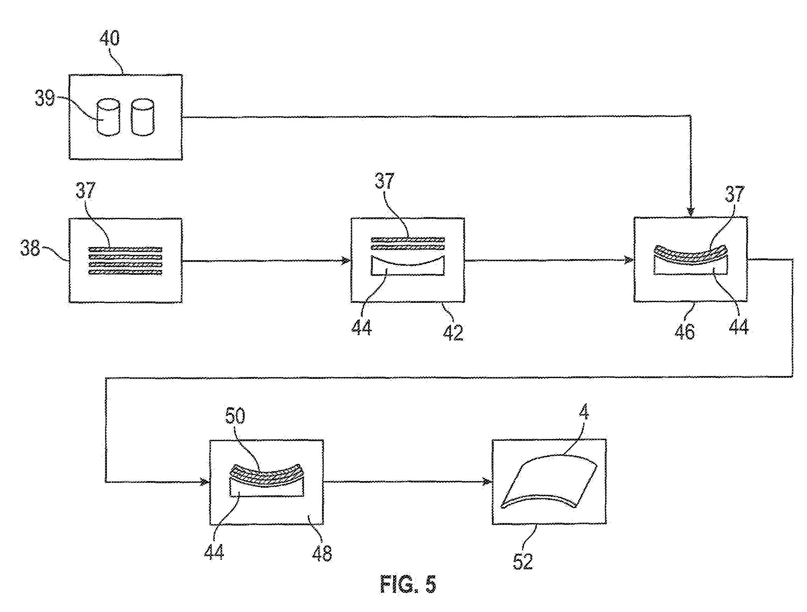

In Fig. 5 is illustrated a preferred embodiment of a method of manufacturing a canopy and/or a framework of a bus stop shelter, the method comprising the steps of:
- providing a plurality of woven mats 37 of flax fibers in step 38, the woven mats 38 optionally being provided by a supplier of such goods and delivered to the facility wherein the canopy and/or a framework of a bus stop shelter is manufactured;
- providing a matrix, for example in a barrel 39, comprising at least 80% bio-epoxy - and the remainder comprising conventional epoxy in step 40, the matrix optionally being provided by a suitable provider of such goods and delivered to the facility wherein the canopy and/or a framework of a bus stop shelter is manufactured, or alternatively, being provided as a finished mixture of bio-epoxy and conventional epoxy or mixed in the appropriate ratio at the site wherein the canopy and/or a framework of a bus stop shelter is manufactured;

- placing at least two layer of the woven mats 37 of flax fibers in a matched die 44 as indicated in step 42;
- applying the matrix material to the woven mats 37 of flax fibers while they are in the die 44 as indicated in step 46;
- subsequently curing the matrix material to form a consolidated laminated structure 50 of woven mats 37 and matrix material at room temperature, and finally
- removing the cured consolidated structure 50 of woven mats and matrix material from the die 44 and cutting and/or grinding excess material therefrom, as indicated in in step 52, in order to provide a canopy 4 (and/or a framework) having the desired finish.

In an embodiment of the method illustrated in Fig. 5, the step 42 of placing said layer of woven mats 37 of flax fibers in the die is performed by hand lay-up, and the step 46 of applying the matrix material to the mats is performed manually using brushes and rollers.

In another embodiment of the method illustrated in Fig. 5, the step 46 of applying said matrix material to the mats 37 is performed by
- placing the plurality of mats 37 of woven flax fibers in a vacuum bag, and
- infusing the matrix material into the flax fibers by drawing it through the flax fibers using vacuum while the vacuum bag is placed in the matched die 44, thereby forming a laminated structure of layers of mats 37 and matrix material that matches the shape of the die 44 when cured.

### LIST OF REFERENCE NUMBERS

In the following is given a list of reference numbers, which are used in the detailed description of the invention.
- 2: bus stop shelter,
- 4: canopy,
- 6, 8, 10: wall sections,
- 12: sidewalk,
- 14: person,
- 16: framework,
- 18: step of providing woven mats of natural fibers,
- 20: a roll comprising a plurality of coherent mats of natural fiber,
- 22: woven mats of natural fiber,
- 24: cutting tool,
- 26: step of spraying the mats with matrix material,
- 28: step of stacking a plurality of mats in a layer,
- 30: step of placing said layer of mats into a pre-heated die,
- 32: step of applying pressure to said laminated structure of mats and matrix material,
- 34: step of removing the finished mould from the die,
- 36: die,
- 37: woven mats of flax fibers,
- 38: step of providing woven mats of flax fibers,
- 39: barrels of matrix material,
- 40: step of providing matrix material comprising at least 80% bio-epoxy,
- 42: step of placing mats of woven flax fibers in a matched die,
- 44: matched die,
- 46: step of applying the matrix material to the mats of woven flax fibers
- 50: consolidated structure of woven mats of flax fibers and matrix material, and
- 52: step of removing the cured consolidated structure of mats of flax fibers and matrix material from the matched die.

## Claims

1. A bus stop shelter r (2) comprising an elongated canopy (4) forming an overhead roof for the bus stop shelter, at least two wall r sections (6, 8), said canopy and wall sections being supported by a framework (16) mounted on a sidewalk, said canopy and wall sections defining a partially enclosed covered space providing shade and shelter for people within said enclosed covered space, **characterized in that** the canopy is formed from a biocomposite material, said biocomposite material being formed by a matrix comprising 75% to 90% of biodegradable plastics in the form of biologically derived polyester and/or bio-epoxy, and the remainder of the matrix being conventional polyester and/or conventional epoxy, and a reinforcement of at least one layer of woven mats of natural fibers, wherein both the biodegradable plastics and the natural fibers are derived from renewable natural resources.

2. A bus stop shelter according to claim 1, wherein the supporting frame is also formed by a biocomposite material, said biocomposite material being formed by a matrix comprising one or more at least in part biodegradable plastics and a reinforcement of at least one layer of woven mats of natural fibers, wherein both the biodegradable plastics and the natural fibers are derived from renewable natural resources.

3. A bus stop shelter according to claim 1 or 2, wherein at least one of the wall sections comprises a transparent section, which is connected to said framework.

4. A bus stop shelter according to claim 1, 2 or 3, wherein the canopy is placed on top of said framework, said canopy having an upwardly arced shape.

5. A bus stop shelter according to any of the claims 1 - 4, wherein the matrix comprises any of the following materials: bio-epoxy, polyhydroxyalkanoates, polylactic acid, polybutylene succinate, polycaprolactone, polyanhydrides, and polyvinyl alcohol.

6. A bus stop shelter according to any of the claims 1 - 5, wherein the renewable natural resources are any of the following: straw, wood, bark, seed, fruit, leaf, and bast.

7. A bus stop shelter according to any of the claims 1 - 6, wherein the natural fibers comprise any of the following: flax, jute, hemp, sisal, cotton, ramie, kenaf, and wheat.

8. A bus stop shelter according to any of the claims 1 - 7, wherein the canopy is formed by a layered structure of alternately matrix and woven mats of natural fibers.

9. A bus stop shelter according to any of the claims 2 - 8, wherein the framework is formed by a layered structure of alternately matrix and woven mats of natural fibers.

10. A method of manufacturing a canopy (4) and/or a framework (16) of a bus stop shelter (2), the method comprising the steps of:
- providing a plurality of woven mats of natural fibers (22), wherein the natural fibers have been derived from renewable natural resources,
- providing a matrix comprising 75% to 90% of biodegradable plastic in the form of biologically derived polyester and/or bio-epoxy, and the remainder of the matrix being conventional polyester and/or conventional epoxy, wherein said biodegradable plastic has been derived from renewable natural resources,
- placing at least two layers of the woven mats of natural fibers in a matched die,
- applying the matrix material to the woven mats of natural fibers in the die,
- curing the consolidated laminated structure of woven mats and matrix material at room temperature, and
- removing the cured consolidated structure of woven mats and matrix material from the die and cutting and/or grinding excess material from it in order to provide a canopy and/or a framework having the desired finish.

11. The method according to claim 10, wherein the step of placing said layer of woven mats of natural fibers in the die is performed by hand lay-up, and the step of applying the matrix material to the mats is performed manually using brushes and rollers.

12. The method according to claim 10, wherein the step of applying said matrix material to the mats is performed by
- placing the plurality of mats of woven fibers in a vacuum bag, and
- infusing the matrix material into the fibers by drawing it through the fibers using vacuum, while the vacuum bag is placed in the matched die, thereby forming a laminated structure of layers of mats and matrix material that matches the shape of the die when cured.

13. The method according to any of the claims 10 - 12, further comprising the step of curing the consolidated laminated structure at atmospheric pressure.

14. The method according to any of the claims 10 - 13, wherein the mats are stacked in a charge pattern before being placed in the die.

15. The method according to any of the claims 10 - 14, wherein the matrix comprises any of the following materials: bio-epoxy, polyhydroxyalkanoates, polylactic acid, polybutylene succinate, polycaprolactone, polyanhydrides, and polyvinyl alcohol.

16. The method according to any of the claims 10 - 15, wherein the renewable natural resources are any of the following: straw, wood, bark, seed, fruit, leaf, and bast.

17. The method according to any of the claims 10 - 16, wherein the natural fibers comprise any of the following: flax, jute, hemp, sisal, cotton, ramie, kenaf, and wheat.

18. The method according to any of the claims 10 - 17, further comprising the step of forming said canopy and/or supporting structure around a biologically derived core material, such as cork, wood and/or bio-polyurethane.

## Patentansprüche

1. Bushaltestellenhäuschen (2), umfassend eine längliche Abdeckung (4), welche eine Überdachung des Bushaltestellenhäuschens bildet, wenigstens zwei Wandabschnitte (6, 8), wobei die Abdeckung und die Wandabschnitte durch einen Rahmen (16) gehaltert sind, welcher an einen Gehsteig montiert ist, wobei die Abdeckung und die Wandabschnitte einen teilweise umschlossenen abgedeckten Raum definieren, welcher Schatten und Schutz für Personen innerhalb des umschlossenen abgedeckten Raums bereitstellt, **dadurch gekennzeichnet, dass** die Abdeckung aus einem Bio-Verbundmaterial, wobei das Bio-Verbundmaterial aus einer Matrix gebildet ist, umfassend 75% bis 90% bioabbaubare Kunststoffe in der Form von biologisch gewonnenem Polyester und/oder Bio-Epoxy, und der Rest der Matrix konventionelles Polyester und/oder konventionelles Epoxy ist, und einer Verstärkung aus wenigstens einer Schicht gewebter Matten aus natürlichen Fasern gebildet ist, wobei sowohl die bioabbaubaren Kunststoffe als auch die natürlichen Fasern aus erneuerbaren natürlichen Ressourcen gewonnen sind.

2. Bushaltestellenhäuschen nach Anspruch 1, wobei der Halterungsrahmen auch aus einem Bio-Verbundmaterial gebildet ist, wobei das Bio-Verbundmaterial aus einer Matrix, umfassend ein oder mehrere wenigstens teilweise bioabbaubare Kunststoffe, und einer Verstärkung aus wenigstens einer Schicht gewebter Matten aus natürlichen Fasern gebildet ist, wobei sowohl die bioabbaubaren Kunststoffe als auch die natürlichen Fasern aus erneuerbaren natürlichen Ressourcen gewonnen sind.

3. Bushaltestellenhäuschen nach Anspruch 1 oder 2, wobei wenigstens einer der Wandabschnitte einen transparenten Abschnitt umfasst, welcher mit dem Rahmen verbunden ist.

4. Bushaltestellenhäuschen nach Anspruch 1, 2 oder 3, wobei die Abdeckung auf dem Rahmen platziert ist, wobei die Abdeckung eine nach oben gebogene Form aufweist.

5. Bushaltestellenhäuschen nach einem der Ansprüche 1 - 4, wobei die Matrix beliebige der folgenden Materialien umfasst: Bio-Epoxy, Polyhydroxyalkanoate, Polymilchsäure, Polybutylensuccinat, Polycaprolacton, Polyanhydride und Polyvinylalkohol.

6. Bushaltestellenhäuschen nach einem der Ansprüche 1 - 5, wobei die erneuerbaren natürlichen Ressourcen beliebige der Folgenden sind: Stroh, Holz, Baumrinde, Samen, Frucht, Blatt und Bast.

7. Bushaltestellenhäuschen nach einem der Ansprüche 1 - 6, wobei die natürlichen Fasern beliebige der Folgenden umfassen: Flachs, Jute, Hanf, Sisal, Baumwolle, Ramie, Kenaf und Weizen.

8. Bushaltestellenhäuschen nach einem der Ansprüche 1 - 7, wobei die Abdeckung aus einer geschichteten Struktur von abwechselnd Matrix und gewebten Matten aus natürlichen Fasern gebildet ist.

9. Bushaltestellenhäuschen nach einem der Ansprüche 2 - 8, wobei der Rahmen aus einer geschichteten Struktur aus abwechselnd Matrix und gewebten Matten aus natürlichen Fasern gebildet ist.

10. Verfahren zum Herstellen einer Abdeckung (4) und/oder eines Rahmens (16) eines Bushaltestellenhäuschens (2), wobei das Verfahren die Schritte umfasst:
- Bereitstellen einer Mehrzahl gewebter Matten aus natürlichen Fasern (22), wobei die natürlichen Fasern aus erneuerbaren natürlichen Ressourcen gewonnen worden sind,
- Bereitstellen einer Matrix, umfassend 75% bis 90% eines bioabbaubaren Kunststoffs in der Form von biologisch gewonnenem Polyester und/oder Bio-Epoxy, und wobei der Rest der Matrix konventionelles Polyester und/oder konventionelles Epoxy ist, wobei der bioabbaubare Kunststoff aus erneuerbaren natürlichen Ressourcen gewonnen worden ist,
- Platzieren von wenigstens zwei Schichten der gewebten Matten aus natürlichen Fasern in einem passenden Verformungswerkzeug,
- Anwenden des Matrixmaterials auf die gewebten Matten aus natürlichen Fasern in dem Verformungswerkzeug,
- Aushärten der vereinten laminierten Struktur von gewebten Matten und Matrixmaterial bei Raumtemperatur, und
- Entfernen der ausgehärteten vereinten Struktur von gewebten Matten und Matrixmaterial aus dem Verformungswerkzeug und Schneiden und/oder Abschleifen von überschüssigem Material davon, um eine Abdeckung und/oder einen Rahmen in der gewünschten Ausführung bereitzustellen.

11. Verfahren nach Anspruch 10, wobei der Schritt des Platzierens der Schicht gewebter Matten aus natürlichen Fasern in dem Verformungswerkzeug durch Hand-Einlegen durchgeführt wird, und der Schritt des Anwendens des Matrixmaterials auf die Matten unter Verwendung von Bürsten und Rollen manuell durchgeführt wird.

12. Verfahren nach Anspruch 10, wobei der Schritt des Anwendens des Matrixmaterials auf die Matten durchgeführt wird durch
- Platzieren der Mehrzahl von Matten gewebter Fasern in einem Vakuumbeutel, und
- Eingießen des Matrixmaterials in die Fasern durch Ziehen davon durch die Fasern unter Verwendung von Vakuum, wobei der Vakuumbeutel in dem passenden Verformungswerkzeug platziert wird, um dadurch eine laminierte Struktur aus Schichten von Matten und Matrixmaterial zu bilden, welche zu der Form des Verformungswerkzeugs passen, wenn ausgehärtet.

13. Verfahren nach einem der Ansprüche 10 - 12, ferner umfassend den Schritt eines Aushärtens der vereinten laminierten Struktur bei Atmosphärendruck.

14. Verfahren nach einem der Ansprüche 10 - 13, wobei die Matten in einem Beschickungsmuster gestapelt werden, bevor sie in dem Verformungswerkzeug platziert werden.

15. Verfahren nach einem der Ansprüche 10 - 14, wobei die Matrix beliebige der folgenden Materialien umfasst: Bio-Epoxy, Polyhydroxyalkanoate, Polymilchsäure, Polybutylensuccinat, Polycaprolacton, Polyanhydride und Polyvinylalkohol.

16. Verfahren nach einem der Ansprüche 10 - 15, wobei die erneuerbaren natürlichen Ressourcen beliebige der Folgenden sind: Stroh, Holz, Baumrinde, Samen, Frucht, Blatt und Bast.

17. Verfahren nach einem der Ansprüche 10 - 16, wobei die natürlichen Fasern beliebige der Folgenden umfassen: Flachs, Jute, Hanf, Sisal, Baumwolle, Ramie, Kenaf und Weizen.

18. Verfahren nach einem der Ansprüche 10 - 17, ferner umfassend den Schritt eines Bildens der Abdeckung und/oder Halterungsstruktur um ein biologisch gewonnenes Kernmaterial, wie beispielsweise Kork, Holz und/oder Bio-Polyurethan.

## Revendications

1. Abri d'arrêt de bus (2) comprenant un auvent allongé (4) formant un toit suspendu pour l'abri d'arrêt de bus, au moins deux sections de paroi (6, 8), ledit auvent et les sections de paroi étant supportés par un cadre (16) monté sur un trottoir, ledit auvent et les sections de paroi définissant un espace couvert partiellement enfermé fournissant de l'ombre et un abri pour des personnes dans ledit espace couvert enfermé, **caractérisé en ce que** l'auvent est formé par un matériau biocomposite, ledit matériau biocomposite étant formé par une matrice comprenant 75 % à 90 % de plastiques biodégradables sous la forme de polyester dérivé biologiquement et/ou bio-époxy, et le reste de la matrice étant un polyester traditionnel et/ou une époxy traditionnelle, et un renforcement d'au moins une couche de nattes tissées de fibres naturelles, dans lequel à la fois les plastiques biodégradables et les fibres naturelles sont dérivés de ressources naturelles renouvelables.

2. Abri d'arrêt de bus selon la revendication 1, dans lequel le cadre de support est aussi formé par un matériau biocomposite, ledit matériau biocomposite étant formé par une matrice comprenant un ou plusieurs de plastiques au moins en partie biodégradables et un renforcement d'au moins une couche de nattes tissées de fibres naturelles, dans lequel à la fois les plastiques biodégradables et les fibres naturelles sont dérivés de ressources naturelles renouvelables.

3. Abri d'arrêt de bus selon la revendication 1 ou 2, dans lequel au moins une des sections de paroi comprend une section transparente qui est reliée audit cadre.

4. Abri d'arrêt de bus selon la revendication 1, 2 ou 3, dans lequel l'auvent est placé sur le dessus dudit cadre, ledit auvent présentant une forme arquée vers le haut.

5. Abri d'arrêt de bus selon l'une quelconque des revendications 1 à 4, dans lequel la matrice comprend l'un quelconque des matériaux suivants : bio-époxy, polyhydroxyalcanoates, acide polylactique, succinate de polybutylène, polycaprolactone, polyanhydrides et alcool polyvinylique.

6. Abri d'arrêt de bus selon l'une quelconque des revendications 1 à 5, dans lequel les ressources naturelles renouvelables sont l'une quelconque des suivantes : paille, bois, écorce, graine, fruit, feuille et liber.

7. Abri d'arrêt de bus selon l'une quelconque des revendications 1 à 6, dans lequel les fibres naturelles comprennent l'une quelconque des suivantes : lin, jute, chanvre, sisal, coton, ramie, kenaf et blé.

8. Abri d'arrêt de bus selon l'une quelconque des revendications 1 à 7, dans lequel l'auvent est formé par une structure en couche alternativement de matrice et nattes tissées de fibres naturelles.

9. Abri d'arrêt de bus selon l'une quelconque des revendications 2 à 8, dans lequel le cadre est formé par une structure en couche alternativement de matrice et nattes tissées de fibres naturelles.

10. Procédé de fabrication d'un auvent (4) et/ou d'un cadre (16) d'un abri d'arrêt de bus (2), le procédé comprenant les étapes de :
- fourniture d'une pluralité de nattes tissées de fibres naturelles (22), dans lequel les fibres naturelles ont été dérivées de ressources naturelles renouvelables,
- fourniture d'une matrice comprenant 75 % à 90 % de plastique biodégradable sous la forme de polyester dérivé biologiquement et/ou bio-époxy, et le reste de la matrice étant du polyester traditionnel et/ou de l'époxy traditionnelle, dans lequel ledit plastique biodégradable a été dérivé de ressources naturelles renouvelables,
- placement au moins de deux couches de nattes tissées de fibres naturelles dans une matrice adaptée,
- application du matériau de matrice aux nattes tissées de fibres naturelles dans la matrice,
- durcissement de la structure laminée consolidée de nattes tissées et matériau de matrice à température ambiante, et
- retrait de la structure consolidée durcie de nattes tissées et matériau de matrice, de la matrice et coupe et/ou meulage de matériau en excès de celle-ci afin de fournir un auvent et/ou un cadre présentant le fini souhaité.

11. Procédé selon la revendication 10, dans lequel l'étape de placement de ladite couche de nattes tissées de fibres naturelles dans la matrice est réalisée par superposition à la main, et l'étape d'application du matériau de matrice aux nappes est réalisée manuellement en utilisant des brosses et rouleaux.

12. Procédé selon la revendication 10, dans lequel l'étape d'application dudit matériau de matrice aux nattes est réalisée par
- placement de la pluralité de nattes de fibres tissées dans un sac à vide et
- infusion du matériau de matrice dans les fibres par son aspiration au travers des fibres en utilisant le vide, alors que le sac à vide est placé dans la matrice adaptée, formant par là même une structure laminée de couches de nattes et matériau de matrice qui s'adapte à la forme de la matrice lorsqu'elle est durcie.

13. Procédé selon l'une quelconque des revendications 10 à 12, comprenant en outre l'étape de durcissement de la structure laminée consolidée à la pression atmosphérique.

14. Procédé selon l'une quelconque des revendications 10 à 13, dans lequel les nattes sont empilées dans un motif de charge avant d'être placées dans la matrice.

15. Procédé selon l'une quelconque des revendications 10 à 14, dans lequel la matrice comprend l'un quelconque des matériaux suivants : bio-époxy, polyhydroxyalcanoates, acide polylactique, succinate de polybutylène, polycaprolactone, polyanhydrides et alcool polyvinylique.

16. Procédé selon l'une quelconque des revendications 10 à 15, dans lequel les ressources naturelles renouvelables sont l'une quelconque des suivantes : paille, bois, écorce, graine, fruit, feuille et liber.

17. Procédé selon l'une quelconque des revendications 10 à 16, dans lequel les fibres naturelles comprennent l'une quelconque des suivantes : lin, jute, chanvre, sisal, coton, ramie, kenaf et blé.

18. Procédé selon l'une quelconque des revendications 10 à 17, comprenant en outre l'étape de formation dudit auvent et/ou de ladite structure de support autour d'un matériau coeur dérivé biologiquement tel que du liège, du bois et/ou du bio-polyuréthane.
